# EUROPÄISCHE PATENTSCHRIFT

(11) **EP 2 318 921 B1**
(45) Veröffentlichungstag und Bekanntmachung des Hinweises auf die Patenterteilung: **10.05.2017**
(21) Anmeldenummer: 09776770.1
(22) Anmeldetag: 18.06.2009
(51) Int. Cl.: G06F 9/445, G07F 7/10, G06Q 20/34

(54) **LADEN UND AKTUALISIEREN EINER PERSONALISIERUNGSBEDÜRFTIGEN APPLIKATION**
LOADING AND UPDATING AN APPLICATION REQUIRING PERSONALIZATION
CHARGEMENT ET ACTUALISATION D UNE APPLICATION NÉCESSITANT UNE PERSONNALISATION

(30) Priorität: 21.07.2008 DE 102008033976
(43) Veröffentlichungstag der Anmeldung: 11.05.2011
(73) Patentinhaber: Giesecke & Devrient GmbH, 81677 München (DE)
(72) Erfinder: BERNARD, Eddy, 80336 München (DE); NEUBAUER, Lucas, 80802 München (DE); MÖNCH, Joachim, 80634 München (DE)
(86) Internationale Anmeldenummer: PCT/EP2009/004408
(87) Internationale Veröffentlichungsnummer: WO 2010/009789

(56) Entgegenhaltungen:
- DE-A1- 19 634 064
- GB-A- 2 358 500
- US-A- 6 005 942
- RANKL W ET AL: "Handbuch der Chipkarten, 4.Auflage, Kap. 10.3, 10.4 Lebenszyklus einer Chipkarte" HANDBUCH DER CHIPKARTEN, XX, XX, 29. August 2002 (2002-08-29), Seiten 638-656, XP002300685

## Beschreibung

Die Erfindung betrifft ein Verfahren zum Laden einer personalisierungsbedürftigen Applikation in ein tragbares Speichermedium, ein Verfahren zum Aktualisieren einer in einem tragbaren Speichermedium abgespeicherten Applikation, sowie ein tragbares Speichermedium und eine System.

Tragbare Speichermedien werden zum Bereithalten von Applikationen für unterschiedliche Einsatzgebiete verwendet. Das tragbare Speichermedium hat einen Applikationsspeicher und eine Speicherverwaltungseinrichtung, z.B. einen Speichercontroller, durch die der Applikationsspeicher verwaltet wird. Wahlweise hat das Speichermedium einen Mikroprozessor, wobei die Aufgabe der Speicherverwaltung wahlweise vom Mikroprozessor durchgeführt wird. Beispiele solcher tragbarer Speichermedien sind mit einem Mikroprozessor ausgestattete Smart Cards und mit einem Speichercontroller ausgestattete Speicherkarten. Bei einem Einsatz des tragbaren Speichermediums im Mobilfunkbereich kann das tragbare Speichermedium beispielsweise als Smart Card mit einem Sicherheitsmodul zur Nutzung eines Endgeräts (z.B. Mobiltelefon) in einem Mobilfunknetz gestaltet sein oder in eine solche Smart Card integriert sein. Die Smart Card ist beispielsweise eine SIM-Karte für das GSM-System oder eine USIM-Karte für das UMTS-System oder eine ähnliche Smart Card. Wahlweise ist das tragbare Speichermedium als Pay TV Karte zur Nutzung von Bezahlfernsehen gestaltet oder in eine solche Pay TV Karte integriert. Wahlweise ist das tragbare Speichermedium eine in eine Secure Flash Card integrierte Smart Card, wobei die Secure Flash Card einen der Smart Card übergeordneten Flash-Controller hat.

Das tragbare Speichermedium lässt sich mittels eines Endgeräts auslesen und beschreiben. Als Endgerät ist beispielsweise ein mobiles Endgerät für ein Mobilfunknetz, z.B. ein Mobiltelefon, PDA, Smart Phone etc., oder eine Set Top Box für Bezahlfernsehen (Pay TV) vorgesehen. Bei einem tragbaren Speichermedium, das als in eine Secure Flash Card integrierte Smart Card gestaltet ist, kann als Endgerät ein Flash-Controller vorgesehen sein oder alternativ ein mobiles Endgerät wie z.B. Mobiltelefon etc, PDA oder Smart Phone.

Eine Applikation für ein tragbares Speichermedium muss in der Regel auf den Nutzer der Applikation personalisiert werden. Die Applikation ist zunächst unpersonalisiert, d.h. anonym, und somit für jeden potentiellen Nutzer identisch und nutzbar. Erst bei der Personalisierung wird die zunächst anonyme Applikation mit Personalisierungsdaten für den Nutzer einzigartig gemacht. Die Personalisierungsdaten umfassen beispielsweise persönliche Identitätsdaten betreffend den Nutzer und Gerätedaten eines Geräts zur Nutzung des Speichermediums und sind zumindest teilweise erforderlich, damit die Applikation auf dem Speichermedium genutzt werden kann. Zur Personalisierung wird zunächst die Applikation in unpersonalisierter Form bereitgestellt. Anschließend werden die Personalisierungsdaten in die Applikation geladen und die Applikation dadurch personalisiert.

Änderungen der Applikation beim Hersteller oder Anbieter (Provider) der Applikation machen es von Zeit zu Zeit erforderlich, dass eine aktualisierte Applikation in das tragbare Speichermedium geladen wird. Eine aktualisierte Applikation wird z.B. bereitgestellt, um Fehler der Applikation zu beheben, oder um zusätzliche oder geänderte Dienstleistungen, welche die Applikation bietet, an den Nutzer bereitzustellen.

Herkömmlicherweise werden zum Aktualisieren einer Applikation die aktualisierte Applikation, die zunächst wieder unpersonalisiert ist, und die Personalisierungsdaten zum Personalisieren der Applikation von einem Server des Herstellers oder Anbieters aus über eine serverseitige Verbindung in das tragbare Speichermedium geladen. Beim herkömmlichen Verfahren zur Applikationsaktualisierung ist es erforderlich, dass bei jedem Laden einer aktualisierten Applikation die Personalisierungsdaten beim Hersteller oder Anbieter der Applikation zur Verfügung stehen müssen, damit sie erneut in das Speichermedium geladen werden können. Hierdurch haben herkömmliche Applikationsaktualisierungen für den Hersteller oder Anbieter der Applikation einen hohen Verwaltungsaufwand. Zudem müssen die Personalisierungsdaten bei jeder Applikationsaktualisierung über die serverseitige Verbindung geladen werden. Da die Kosten der serverseitigen Verbindung häufig mit übertragener Datenmenge und/ oder Dauer der Verbindung steigen, verursachen die bei jeder Aktualisierung erneut mit zu übertragenden Personalisierungsdaten ggf. zusätzliche Kosten für den Hersteller oder Anbieter der Applikation und für den Nutzer des Speichermediums. Die Kosten der serverseitigen Verbindung können besonders im Fall von Applikationsaktualisierungen "over the air" (OTA), d.h. falls als serverseitige Verbindung eine (Mobil-)Funkverbindung verwendet wird, sogar ganz erheblich sein. Eine weitere Gefahr bei der Übertragung von Personalisierungsdaten über eine serverseitige Verbindung besteht darin, dass Personalisierungsdaten streng vertraulich sind und bei jeder serverseitigen Übertragung abgehorcht werden können. Bei einer Personalisierung einer erstmalig geladenen Applikation im sicheren Umfeld des Herstellers des Speichermediums ("preissuance") mag die Gefahr des Aushorchens der Personalisierungsdaten aus der serverseitigen Verbindung noch vertretbar sein. Beim Laden von aktualisierten Applikationen nach der Herausgabe des Speichermediums durch den Hersteller ("post-issuance") ist die Gefahr, dass Personalisierungsdaten aus der serverseitigen Verbindung ausgehorcht werden, dagegen groß.

EP 1 936 574 A1 beschreibt ein Laden einer personalisierungsbedürftigen Java Card Applikation in eine Java Card. Dabei werden eine Applikation und Personalisierungsdaten zur Personalisierung der Applikation gemeinsam in einem Paket in die Java Card geladen. Die Applikation wird in der Java Card installiert und anschließend wird die installierte Applikation mit den Personalisierungsdaten aus dem Paket personalisiert.
Das Dokument GB 2 358 500 A offenbart ein Verfahren zum Laden einer Applikation aus einem Terminal in ein tragbares Speichermedium (target smart card). Hierbei werden Personalisierungsdaten (customer details) und eine unpersonalisierte Applikation (generic application) in einen Chip des Terminals geladen. Innerhalb des Chips des Terminals wird die unpersonalisierte Applikation mit den Personalisierungsdaten personalisiert. Anschließend wird die personalisierte Applikation in das tragbare Speichermedium geladen.
Aufgabe der Erfindung ist es, ein effizientes, kostengünstiges und zugleich sicheres Verfahren zum Laden einer personalisierungsbedürftigen Applikation in ein tragbares Speichermedium sowie ein Verfahren zum Aktualisieren einer in einem tragbaren Speichermedium abgespeicherten Applikation zu schaffen. Ein entsprechendes tragbares Speichermedium und System mit Speichermedium und Endgerät sollen ebenfalls angegeben werden.
Die Aufgabe wird gelöst durch ein Ladeverfahren gemäß dem unabhängigen Anspruch 1. Weiter sind angegeben ein Aktualisierungsverfahren gemäß dem unabhängigen Anspruch 3, ein tratbares Speichermedium gemäß Anspruch 8, und ein System mit einem tragbaren Speichermedium gemäß Anspruch 14. Vorteilhafte Ausgestaltungen der Erfindung sind in den abhängigen Ansprüchen angegeben. Im Folgenden wird die Erfindung an Hand von Ausführungsbeispielen und unter Bezugnahme auf die Zeichnung näher erläutert, in der zeigen:
Fig. 1 ein Schaubild zur Veranschaulichung des Ladens einer personalisierungsbedürftigen Applikation, gemäß einer ersten Ausführungsform der Erfindung ;
Fig. 2 das Laden einer personalisierungsbedürftigen Applikation, gemäß einer zweiten Ausführungsform der Erfindung;
Fig. 3 das Laden einer personalisierungsbedürftigen Applikation, gemäß einer dritten Ausführungsform der Erfindung;
Fig.4 das Laden einer personalisierungsbedürftigen Applikation, gemäß einer vierten Ausführungsform der Erfindung;
Fig. 5 das Laden einer aktualisierten Applikation, gemäß einer ersten Ausführungsform der Erfindung;
Fig. 6 das Laden der Personalisierungsdaten beim Verfahren aus Fig. 5;
Fig. 7 das Laden von Personalisierungsdaten in eine aktualisierte Applikation, gemäß einer zweiten Ausführungsform der Erfindung;
Fig. 8 das Laden der personalisierten aktualisierten Applikation beim Verfahren aus Fig. 7;
Fig. 9 eine schematische Darstellung des Auf baus eines tragbaren Speichermediums, gemäß einer Ausführungsform der Erfindung;
Fig. 10 eine schematische Darstellung eines tragbaren Speichermediums im Zusammenwirken mit einem Endgerät, gemäß einer Ausführungsform der Erfindung;
Fig. 11 eine schematische Darstellung eines tragbaren Speichermediums im Zusammenwirken mit einem Endgerät, gemäß einer weiteren Ausführungsform der Erfindung;
Fig. 12 eine schematische Darstellung eines tragbaren Speichermediums im Zusammenwirken mit einem Endgerät, gemäß einer weiteren Ausführungsform der Erfindung.

Anspruch 1 lehrt ein Verfahren zum Laden einer personalisierungsbedürftigen Applikation, für ein tragbares Speichermedium, das zum Betrieb in einem Endgerät eingerichtet ist, in das Speichermedium, wobei
- die Applikation und Personalisierungsdaten in einem außerhalb des Speichermediums und außerhalb des Endgeräts angeordneten Server bereitgestellt werden, der für eine Übertragung von Applikationen und Personalisierungsdaten über eine serverseitige Verbindung mit dem tragbaren Speichermedium oder/und dem Endgerät verbindbar ist,
- die Applikation zumindest teilweise über die serverseitige Verbindung in einen Applikationsspeicher des Speichermediums geladen wird,
- die Personalisierungsdaten in die Applikation geladen werden, derart, dass die Applikation mit den Personalisierungsdaten personalisiert wird, und
- die Personalisierungsdaten in ein Rückspeicher-Modul geladen werden, das von in dem Applikationsspeicher abgespeicherten Applikationen unabhängig ist, als nichtflüchtiger Speicher gestaltet ist, und innerhalb des tragbaren Speichermediums angeordnet ist.
Die Personalisierungsdaten werden, zusätzlich zu ihrem Laden in die Applikation, zumindest teilweise in ein von der Applikation und ggf. weiteren Applikationen unabhängiges Rückspeicher-Modul geladen und dort nichtflüchtig abgespeichert. Dadurch, dass die Personalisierungsdaten in dem Rückspeicher-Modul im Speichermedium selbst bereitgehalten werden, kann eine später in das Speichermedium zu ladende aktualisierte Applikation mit den Personalisierungsdaten aus dem Rückspeicher-Modul personalisiert werden. Ein Vorrätighalten der Personalisierungsdaten beim Hersteller oder Anbieter der Applikation, außerhalb des Speichermediums und außerhalb des Endgeräts, ist nicht erforderlich. Zudem kann die Personalisierung der aktualisierten Applikation erfolgen, ohne dass eine serverseitige Verbindung hergestellt wird. Hierdurch ist der Verwaltungsaufwand für den Hersteller oder Anbieter der Applikation verringert. Zudem sind die Kosten für das spätere Laden der aktualisierten Applikation reduziert, da lediglich die Applikation über die serverseitige Verbindung übertragen werden muss, nicht jedoch die Personalisierungsdaten. Die Kostenersparnis kommt sowohl dem Hersteller oder Anbieter der Applikation als auch dem Nutzer des Speichermediums zugute. Zudem sind spätere Aktualisierungen von Applikationen besonders sicher, da keine Personalisierungsdaten mehr über die serverseitige Verbindung übertragen werden.

Erfindungsgemäß ist das Rückspeicher-Modul innerhalb des Speichermediums angeordnet. Dieses Merkmal hat den Vorteil, dass das Rückspeicher-Modul unabhängig vom verwendeten Endgerät und organisatorisch eng benachbart zum Applikationsspeicher vorgesehen ist. Hierdurch lässt sich das Rückspeicher-Modul einfacher gegen unbefugte Zugriffe auf seinen Speicherinhalt absichern als außerhalb des Speichermediums.

Daher ist gemäß Anspruch 1 ein effizientes, kostengünstiges und sicheres Verfahren zum Laden einer personalisierungsbedürftigen Applikation in ein tragbares Speichermedium geschaffen.

Bei einem erfindungsgemäßen Verfahren zum Betreiben eines tragbaren Speichermediums in einem Endgerät enthält das tragbare Speichermedium eine Applikation, die wie oben beschrieben gemäß der Erfindung in das tragbare Speichermedium geladen worden ist. Die im Applikationsspeicher abgespeicherte und personalisierte Applikation erzeugt während des Betriebs des Speichermediums Applikationsdaten, durch welche die abgespeicherte und personalisierte Applikation geändert wird, oder die Applikation nimmt solche Applikationsdaten von außerhalb des Speichermediums entgegen.

Die Applikationsdaten werden gemäß der Erfindung vollständig oder zumindest teilweise in das Rückspeicher-Modul geladen. Bei einer späteren Applikationsaktualisierung können Veränderungen, die an der ursprünglich im Applikationsspeicher abgespeicherten Applikation vorgenommen worden sind, in die aktualisierte Applikation übertragen werden, indem die Applikationsdaten, die aus der ursprünglichen Applikation in das Rückspeicher-Modul geladen worden sind, aus dem Rückspeicher-Modul in die aktualisierte Applikation geladen werden.

Als Applikationsdaten, die von der Applikation erzeugt werden, sind beispielsweise die Inhalte oder Zählerstände von Log-Dateien oder Zählern vorgesehen, die beim Ablaufen der Applikation verändert werden. Als Applikationsdaten, die von außerhalb des Speichermediums in die Applikation geladen und von der Applikation entgegengenommen werden, sind beispielsweise bei einer Pay TV Karte Empfangsberechtigungen für den Empfang von Dateninhalten (z.B. Fernsehsendungen) vorgesehen. Solche Empfangsberechtigungen ändern sich in regelmäßigen oder unregelmäßigen Zeitabständen, auf Veranlassung des Karteninhabers oder des Datenproviders. Alternativ sind als Applikationsdaten sonstige während des Betriebs des Speichermediums in der Applikation erzeugte oder empfangene Daten vorgesehen, die bewirken, dass die Applikation verändert wird.

Die Applikation wird wahlweise vollständig über die serverseitige Verbindung aus dem Server direkt in den Anwendungsspeicher innerhalb des Speichermediums geladen. Wahlweise, wenn die Applikation nur teilweise über die serverseitige Verbindung geladen wird, wird die Applikation beispielsweise über die serverseitige Verbindung in das Endgerät geladen und anschließend über eine externe Verbindung zwischen dem Endgerät und dem Speichermedium (weiter unten als externe Verbindung bezeichnet, im Gegensatz zu einer internen Verbindung innerhalb des Speichermediums) aus dem Endgerät in das Speichermedium geladen.

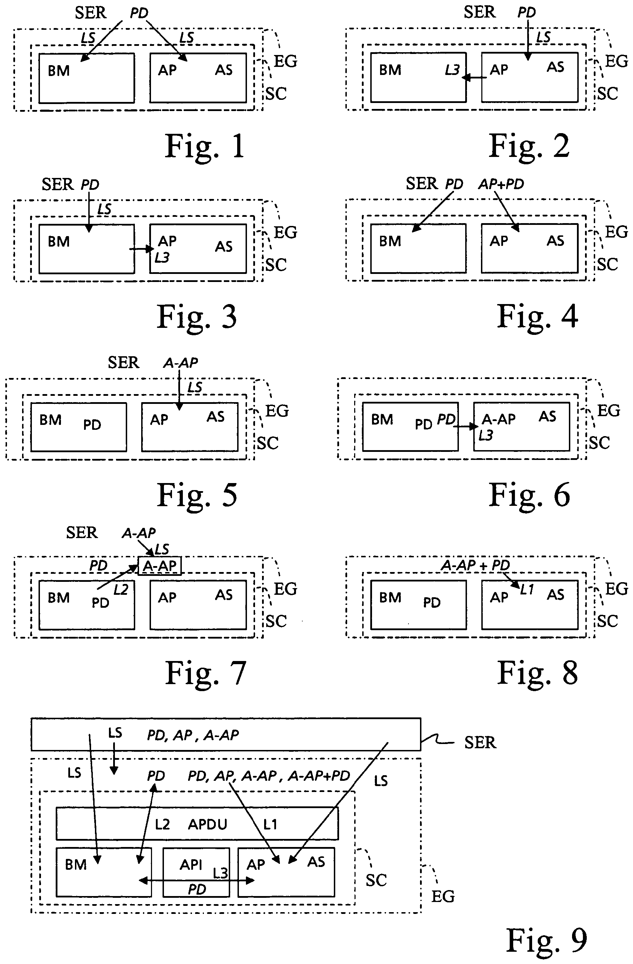

Die Applikation wird wahlweise außerhalb des Applikationsspeichers oder innerhalb des Applikationsspeichers mit den Personalisierungsdaten personalisiert. Bei einer Personalisierung außerhalb des Applikationsspeichers, die in Fig. 1 veranschaulicht ist, werden wahlweise zuerst die Personalisierungsdaten in die Applikation geladen und die Applikation dadurch mit den Personalisierungsdaten personalisiert, und anschließend wird die personalisierte Applikation in den Applikationsspeicher geladen. Bei einer Personalisierung innerhalb des Applikationsspeichers, die in Fig. 2 und Fig. 3 veranschaulicht ist, wird die unpersonalisierte, also noch personalisierungsbedürftige, Applikation zuerst in den Applikationsspeicher geladen. Anschließend werden die Personalisierungsdaten in die bereits im Applikationsspeicher befindliche Applikation geladen, so dass die Applikation innerhalb des Applikationsspeichers mit den Personalisierungsdaten personalisiert wird. Dabei werden die Personalisierungsdaten wahlweise zuerst in den Applikationsspeicher gespeichert und anschließend vom Applikationsspeicher in das Rückspeicher-Modul gespeichert (Fig. 2) oder zuerst in das Rückspeicher-Modul gespeichert und anschließend vom Rückspeicher-Modul in den Applikationsspeicher gespeichert (Fig. 3).

Im Fall, dass die Applikation außerhalb des Applikationsspeichers personalisiert wird, wird die Applikation wahlweise bereits im Server beim Hersteller oder Anbieter der Applikation personalisiert. Somit wird über die serverseitige Verbindung die personalisierte Applikation übertragen. Alternativ wird die Applikation innerhalb des Endgeräts, aber außerhalb des Speichermediums personalisiert und die personalisierte Applikation über die externe Verbindung aus dem Endgerät in das Speichermedium, genauer in den Applikationsspeicher, geladen. Bei dieser Variante werden die Personalisierungsdaten und die unpersonalisierte Applikation über die serverseitige Verbindung übertragen.

Die in den Applikationsspeicher geladene Applikation wird bedarfsweise in dem Applikationsspeicher installiert. Bedarfsweise werden die Personalisierungsdaten in die installierte Applikation geladen.

Wahlweise ist die Applikation eine Java Card Applikation oder ein Java Card Applet gemäß der Spezifikation der Virtuellen Java Card Maschine (JCVM Spec z.B. Version 2.0, 2.2, 2.2.1, 2.2.2, 3.0). In diesem Fall werden wahlweise die Applikation und die Personalisierungsdaten in einem gemeinsamen Paket in das Endgerät oder in das Speichermedium geladen. Das Paket ist beispielsweise ein Java Card CAP Datei, wahlweise gespeichert in einer Java Card JAR Datei. Die Personalisierungsdaten sind wahlweise in einer "Custom Component" (JCVM Spec 3.0, Kapitel 6.1.2) einer CAP Datei oder JAR Datei enthalten. Die Custom Component, vollständig oder zumindest teilweise, wird gemäß der Erfindung in dem Rückspeicher-Modul abgespeichert. Eine später geladene aktualisierte Applikation kann mit der Custom Component aus dem Rückspeicher-Modul personalisiert werden.

Die Erfindung schafft weiter ein Verfahren zum Aktualisieren einer in einem tragbaren Speichermedium, das zum Betrieb in einem Endgerät eingerichtet ist, abgespeicherten personalisierten Applikation für das Speichermedium, durch Laden einer aktualisierten Applikation, durch welche die abgespeicherte Applikation ersetzt werden soll, und durch Laden von Personalisierungsdaten zur Personalisierung der aktualisierten Applikation, wobei - die aktualisierte Applikation in einem außerhalb des Speichermediums und außerhalb des Endgeräts angeordneten Server bereitgestellt wird, der für eine Übertragung von aktualisierten Applikationen über eine serverseitige Verbindung mit dem tragbaren Speichermedium oder/und dem Endgerät verbindbar ist,
- die aktualisierte Applikation in einen Applikationsspeicher des Speichermediums geladen wird, was zumindest teilweise über die serverseitige Verbindung durchgeführt wird, und
- die Personalisierungsdaten aus einem Rückspeicher-Modul in die aktualisierte Applikation geladen werden, derart, dass die aktualisierte Applikation mit den Personalisierungsdaten personalisiert wird, wobei das Rückspeicher-Modul von in dem Applikationsspeicher abgespeicherten Applikationen und/ oder aktualisierten Applikationen unabhängig ist, als nichtflüchtiger Speicher gestaltet ist, und innerhalb des tragbaren Speichermediums angeordnet ist.

Die Personalisierung der aktualisierten Applikation erfolgt mit den im Rückspeicher-Modul abgespeicherten Personalisierungsdaten, und ohne dass eine serverseitige Verbindung hergestellt wird. Daher ist weder ein Bereithalten der Personalisierungsdaten beim Hersteller oder Anbieter der aktualisierten Applikation noch eine serverseitige Verbindung erforderlich. Übertragungen der Personalisierungsdaten zur Personalisierung der aktualisierten Applikation erfolgen ausschließlich innerhalb des geschlossenen Systems aus dem tragbaren Speichermedium und dem Endgerät, nicht jedoch über serverseitige Verbindungen. Deshalb ist das erfindungsgemäße Verfahren zum Aktualisieren einer Applikation besonders kostengünstig und besonders sicher.

Die Applikation, die durch die aktualisierte Applikation ersetzt werden soll, ist beispielsweise gemäß dem erfindungsgemäßen Verfahren zum Laden einer Applikation in das Speichermedium geladen worden, wobei auch die Personalisierungsdaten in das Rückspeicher-Modul geladen worden sind.

Wahlweise hat bei dem Verfahren zum Aktualisieren einer Applikation die im Applikationsspeicher abgespeicherte (und ggf. installierte) und personalisierte Applikation, die ersetzt werden soll, während eines vorangegangenen Betriebs des Speichermediums Applikationsdaten erzeugt, durch welche die abgespeicherte und personalisierte Applikation geändert worden ist. Die Applikationsdaten sind ganz oder zumindest teilweise in das Rückspeicher-Modul geladen worden. Bei der Aktualisierung der Applikation durch Laden der aktualisierten Applikation werden die Applikationsdaten, die aus der ursprünglichen Applikation in das Rückspeicher-Modul geladen worden sind, aus dem Rückspeicher-Modul in die aktualisierte Applikation geladen, derart, dass die aktualisierte Applikation mit den Applikationsdaten geändert wird. Hierdurch werden Veränderungen, die an der ursprünglich im Applikationsspeicher abgespeicherten Applikation vorgenommen worden sind, auf die aktualisierte Applikation übertragen.

Wahlweise wird die Applikation aus dem Applikationsspeicher gelöscht. Wahlweise wird die Applikation gelöscht, nachdem die aktualisierte Applikation in den Applikationsspeicher geladen worden ist. Wahlweise wird die Applikation mit der aktualisierten Applikation überschrieben.

Die Variante der Erfindung, bei der auch Applikationsdaten im Rückspeicher-Modul abgespeichert sind und in die aktualisierte Applikation geladen werden, hat den zusätzlichen Vorteil, dass Applikationsdaten, die insbesondere bei einem Löschen der ursprünglichen Applikation verloren gehen könnten, für die aktualisierte Applikation erhalten bleiben.

Die aktualisierte Applikation wird wahlweise vollständig über die serverseitige Verbindung aus dem Server direkt in den Anwendungsspeicher innerhalb des Speichermediums geladen. Wahlweise, wenn die aktualisierte Applikation nur teilweise über die serverseitige Verbindung geladen wird, wird die aktualisierte Applikation beispielsweise über die serverseitige Verbindung in das Endgerät geladen und anschließend über eine externe Verbindung zwischen dem Endgerät und dem Speichermedium in das Speichermedium geladen.

Die aktualisierte Applikation wird wahlweise innerhalb des Applikationsspeichers (beispielhaft gezeigt in Fig. 4 und 5) oder außerhalb des Applikationsspeichers, dabei z.B. innerhalb des Endgeräts, (beispielhaft gezeigt in Fig. 6 und 7) mit den Personalisierungsdaten personalisiert. Die aktualisierte Applikation wird dabei jedoch stets mit Personalisierungsdaten aus dem Rückspeicher-Modul personalisiert, und ohne dass eine serverseitige Verbindung hergestellt wird.

Wahlweise ist die serverseitige Verbindung als Funkverbindung (OTA, "over the air") gestaltet, insbesondere als Mobilfunkverbindung.

Das Rückspeicher-Modul ist wahlweise zugriffsgesichert. Die Zugriffssicherung wird wahlweise durch ein Authentisierungserfordernis oder/und eine verschlüsselte Ablage der Daten im Rückspeicher-Modul erreicht. Wahlweise wird ein Zugriff auf im Rückspeicher-Modul abgespeicherte Personalisierungsdaten höchstens anlässlich eines berechtigten Ladens einer Applikation oder aktualisierten Applikation in das Speichermedium ermöglicht. Beispielsweise ist für das Laden einer Applikation oder aktualisierten Applikation eine Authentisierung erforderlich. Die Authentisierung für das Applikationsladen umfasst wahlweise eine Authentisierung für einen Zugriff auf die Personalisierungsdaten im Rückspeicher-Modul. Wahlweise werden die Personalisierungsdaten so in das Rückspeicher-Modul gespeichert, dass sie in verschlüsselter Form im Rückspeicher-Modul abgespeichert sind.

Ein erfindungsgemäßes tragbares Speichermedium ist eingerichtet zur Durchführung eines erfindungsgemäßen Verfahrens und hat einen Applikationsspeicher, der eingerichtet ist zum Abspeichern von Applikationen, sowie ein Rückspeicher-Modul, das als nichtflüchtiger Speicher gestaltet ist, und das von im Applikationsspeicher abgespeicherten Applikationen unabhängig ist. Das Rückspeicher-Modul ist dazu eingerichtet, Personalisierungsdaten zur Personalisierung von Applikationen oder aktualisierten Applikationen im Applikationsspeicher bereitzuhalten, so dass eine Personalisierung von (aktualisierten) Applikation ohne ein Bereithalten der Personalisierungsdaten beim Applikationshersteller oder -anbieter und ohne serverseitige Verbindung möglich ist.

Das tragbare Speichermedium ist wahlweise mit einem Mikroprozessor ausgestattet. Wahlweise ist das Speichermedium eine Java Card. Die Applikation ist wahlweise als Java Card Applikation oder Java Card Applet gestaltet. Wahlweise ist das Speichermedium als Pay TV Karte für die Nutzung von Bezahlfernsehen gestaltet oder in eine solche Pay TV Karte integriert. Wahlweise ist das Speichermedium als Smart Card mit einem Sicherheitsmodul zur Nutzung eines Endgeräts in einem Mobilfunknetz gestaltet, z.B. (U)SIM-Karte, oder in eine solche Smart Card (z.B. (U)SIM-Karte) integriert. Wahlweise ist das Speichermedium als Secure Flash Card, aufweisend einen Controller und einen Flash Speicher, gestaltet oder in eine solche Secure Flash Card integriert.

Als Endgerät ist beispielsweise ein mobiles Endgerät wie z.B. Mobiltelefon, PDA, Smartphone oder dergleichen, eine Set Top Box für Bezahlfernsehen (Pay TV) oder ein Controller einer Secure Flash Card vorgesehen.

Das Rückspeicher-Modul und der Applikationsspeicher lassen sich vorzugsweise über eine interne Verbindung miteinander in Datenaustausch-Verbindung bringen. Das Speichermedium, insbesondere das Rückspeicher-Modul und der Applikationsspeicher, lassen sich vorzugsweise über ein oder mehrere externe Verbindungen miteinander in Datenaustausch-Verbindung bringen. Die ein oder mehreren externen Verbindungen können insbesondere Verbindungen gemäß ISO/IEC 7816-3&4 sein.

Ein erfindungsgemäßes System mit einem tragbaren Speichermedium und einem Endgerät zum Betrieb des Speichermediums ist eingerichtet zur Durchführung eines erfindungsgemäßen Verfahrens. Das System hat in dem Speichermedium einen Applikationsspeicher, eingerichtet zum Abspeichern von Applikationen. Das System hat weiter in dem Speichermedium ein Rückspeicher-Modul, das als nichtflüchtiger Speicher gestaltet ist, und das von im Applikationsspeicher abgespeicherten Applikationen unabhängig ist. Das tragbare Speichermedium ist weiter wahlweise wie obenstehend beschrieben gestaltet.

Das Rückspeicher-Modul ist wahlweise als Applikation gestaltet, beispielsweise als Java Card Applikation oder als Java Card Applet, wahlweise als eine Gruppe von mehreren zusammenwirkenden Applikationen, wahlweise als Bibliothek, z.B. als Java Card Library, oder als Gruppe von zusammenwirkenden Bibliotheken.

Eine Personalisierung im Zusammenhang mit der Erfindung kann wahlweise eine Personalisierung vor der Herausgabe des Speichermediums durch den Hersteller sein ("pre-issuance"), oder eine Personalisierung nach der Herausgabe des Speichermediums durch den Hersteller des Speichermediums ("post-issuance"). Eine post-issuance Personalisierung wird zum Beispiel durch einen vom Hersteller des Speichermediums unterschiedlichen Anbieter von Applikationen durchgeführt.

Das Laden von Personalisierungsdaten aus dem Rückspeicher-Modul und in das Rückspeicher-Modul erfolgt wahlweise auf Veranlassung einer personalisierten oder zu personalisierenden Applikation oder auf Veranlassung des Rückspeicher-Moduls oder auf Veranlassung einer von der personalisierten oder zu personalisierenden Applikation und dem Rückspeicher-Modul unterschiedlichen dritten Instanz. Diese dritte Instanz ist wahlweise als eine weitere Applikation gestaltet.
Eine in den Applikationsspeicher geladene Applikation oder aktualisierte Applikation wird bedarfsweise in dem Applikationsspeicher installiert. Bedarfsweise werden die Personalisierungsdaten in die installierte Applikation bzw. aktualisierte Applikation geladen.

Fig. 1 bis 4 veranschaulichen vier Ausführungsformen des Ladens einer personalisierungsbedürftigen Applikation AP in eine Smart Card SC (tragbares Speichermedium), die in einem Endgerät EG betrieben wird. Das Laden der Applikation AP in die Smart Card SC ist nicht dargestellt, lediglich das Laden der Personalisierungsdaten PD zur Personalisierung der Applikation AP. Mit Pfeilen mit Beschriftungen Lx, x=1,2,3, S sind Verbindungen zur Übertragung von Daten dargestellt, die auch in Fig. 9 dargestellt sind.

Bei einer ersten Ausführungsform gemäß Fig. 1 werden Personalisierungsdaten PD zur Personalisierung der Applikation AP von einem Server SER außerhalb der Smart Card SC und außerhalb des Endgeräts EG, über eine serverseitige Verbindung LS, einerseits in die im Applikationsspeicher AS abgespeicherte Applikation AP abgespeichert, so dass die Applikation AP personalisiert wird, und andererseits in ein Rückspeicher-Modul (Backup-Modul) BM gespeichert und somit für spätere Personalisierungen später geladener aktualisierter Applikationen bereit gehalten.

Bei einer zweiten Ausführungsform gemäß Fig. 2 werden Personalisierungsdaten PD zur Personalisierung der Applikation AP von einem Server SER außerhalb der Smart Card SC und außerhalb des Endgeräts EG über eine serverseitige Verbindung LS in die im Applikationsspeicher AS abgespeicherte Applikation AP abgespeichert, so dass die Applikation AP personalisiert wird. Die Personalisierungsdaten PD werden aus dem Applikationsspeicher AS über eine interne Verbindung L3 in das Rückspeicher-Modul (Backup-Modul) BM gespeichert.

Bei einer dritten Ausführungsform gemäß Fig. 3 werden im Unterschied zu der aus Fig. 2 die Personalisierungsdaten PD zuerst von einem Server SER außerhalb der Smart Card SC und außerhalb des Endgeräts EG über eine serverseitige Verbindung LS in das Rückspeicher-Modul BM gespeichert und anschließend vom Rückspeicher-Modul BM aus über eine interne Verbindung L3 in die im Applikationsspeicher AS abgespeicherte Applikation AP abgespeichert, so dass die Applikation AP personalisiert wird.

Bei einer vierten Ausführungsform gemäß Fig. 4 wird die Applikation AP beim Server SER außerhalb der Smart Card SC und außerhalb des Endgeräts EG personalisiert. Über eine serverseitige Verbindung LS werden die Personalisierungsdaten in das Rückspeicher-Modul BM und die personalisierte Applikation in den Applikationsspeicher AS geladen.

Bei den Ausführungsformen aus Fig. 1 bis 4 kann, in Abweichung von der Darstellung in Fig. 1 bis 4, die serverseitige Verbindung LS vom Server SER aus wahlweise nur bis zum Endgerät EG gehen und die weitere Verbindung zur Smart Card SC durch eine externe Verbindung L1 oder L2, wie die in Fig. 9 dargestellte, gebildet sein.

Fig. 5 bis 8 veranschaulichen das Laden einer aktualisierten Applikation A-AP in eine Smart Card SC (tragbares Speichermedium), die in einem Endgerät EG betrieben wird. Pfeile Lx deuten Verbindungen an (vgl. auch Fig. 9).

Bei einer ersten Ausführungsform des Ladens einer aktualisierten Applikation A-AP, dargestellt in Fig. 5 und 6, wird die aktualisierte Applikation A-AP über eine serverseitige Verbindung LS in unpersonalisierter Form in den Applikationsspeicher AS der Smart Card SC geladen (Fig. 5). Anschließend werden Personalisierungsdaten PD - und ggf. Anwendungsdaten AD - , die z.B. gemäß einer der Fig. 1 bis 4 in das Rückspeicher-Modul (Backup-Modul) BM geladen worden sind, über eine interne Verbindung L3 aus dem Rückspeicher-Modul BM in die aktualisierte Applikation A-AP geladen, so dass die aktualisierte Applikation A-AP personalisiert wird (Fig. 6).

Bei einer zweiten Ausführungsform des Ladens einer aktualisierten Applikation A-AP, dargestellt in Fig. 7 und 8, wird die aktualisierte Applikation A-AP in unpersonalisierter Form vom Server SER aus über eine serverseitige Verbindung LS in das Endgerät EG geladen. Die Personalisierungsdaten PD und ggf. Anwendungsdaten AD werden über eine externe Verbindung L2 aus dem Rückspeicher-Modul BM in die im Endgerät EG bereitgehaltene aktualisierte Applikation A-AP geladen, so dass die aktualisierte Applikation A-AP außerhalb der Smart Card SC und zugleich innerhalb des Endgeräts EG personalisiert wird (Fig. 7). Anschließend wird die personalisierte aktualisierte Applikation A-AP+PD (+AD) über eine externe Verbindung L1 in den Applikationsspeicher AS der Smart Card SC geladen (Fig. 8).

Fig. 9 zeigt schematisch den Aufbau einer Smart Card SC, gemäß einer Ausführungsform der Erfindung. Die Smart Card ist als Java Card gestaltet. Die Smart Card SC wird in einem Endgerät EG betrieben. Das Rückspeicher-Modul BM und der Applikationsspeicher AS sind über eine interne Schnittstelle API, z.B. ein Application Programming Interface (API), gekoppelt, über die eine interne Verbindung L3 herstellbar ist (Pfeil L3). Das Rückspeicher-Modul BM und der Applikationsspeicher AS sind über eine externe Schnittstelle APDU, z.B. ein APDU Interface, mit einem externen Endgerät gekoppelt, über die externe Verbindungen L2 bzw. L1 herstellbar sind. Über die interne Schnittstelle API lassen sich in der internen Verbindung L3 Personalisierungsdaten PD und ggf. Anwendungsdaten AD wahlweise vom Rückspeicher-Modul BM in den Applikationsspeicher AS oder vom Applikationsspeicher AS in das Rückspeicher-Modul BM übertragen. Über die externe Schnittstelle APDU lassen sich über die erste externe Verbindung L1 z.B. Personalisierungsdaten PD, Applikationen AP, aktualisierte Applikationen A-AP, personalisierte aktualisierte Applikationen aus dem Endgerät EG der Smart Card AC in den Applikationsspeicher AS laden. Über eine zweite externe Verbindung L2 der externen Schnittstelle APDU lassen sich Personalisierungsdaten aus dem Endgerät EG in das Rückspeicher-Modul BM übertragen und umgekehrt aus dem Rückspeicher-Modul BM aus der Smart Card SC heraus übertragen. Verbindungen zum Server SER werden über serverseitige Verbindungen LS hergestellt (Pfeile LS), die zwischen einerseits dem Server SER und andererseits dem Endgerät EG, dem Rückspeicher-Modul BM bzw. dem Applikationsspeicher AS herstellbar sind.

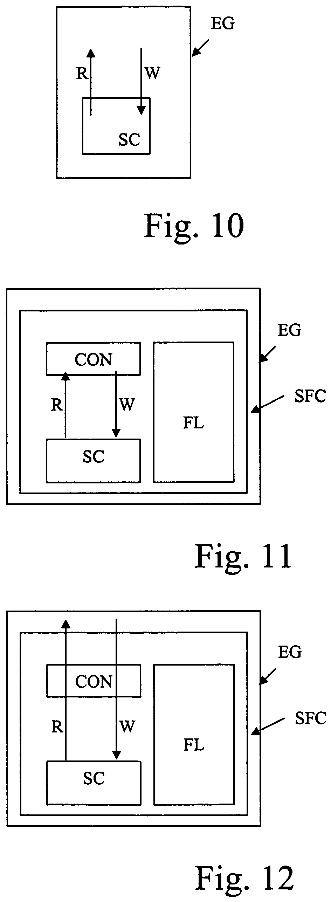

Fig. 10 bis 12 zeigen, in schematischer Darstellung, tragbare Speichermedien SC im Zusammenwirken mit Endgeräten EG, gemäß Ausführungsformen der Erfindung. Das tragbare Speichermedium SC, mit einem Applikationsspeicher AS und einem Rückspeicher-Modul BM ausgestattet, ist als Smart Card SC gestaltet und beispielsweise aufgebaut wie in Fig. 1 bis 9 dargestellt.

Fig. 10 zeigt eine Smart Card SC, die in ein Endgerät EG eingefügt ist, wobei ein Lesen von Daten aus der Smart Card SC (Pfeil R) und ein Schreiben von Daten in die Smart Card SC (Pfeil W) durch das Endgerät EG gesteuert wird. Das Endgerät in Fig. 10 ist beispielsweise ein Mobiltelefon oder ein ähnliches mobiles Endgerät oder eine Pay TV Set Top Box. Die Smart Card SC ist entsprechend z.B. eine (U)SIM-Karte oder Pay TV Karte. Das erfindungsgemäße Laden von Personalisierungsdaten PD aus dem Rückspeicher-Modul BM in eine aktualisierte Applikation A-AP, z.B. gemäß Fig. 6 oder Fig. 7, wird bei der Konfiguration aus Fig. 10 durch das Endgerät EG gesteuert.

Fig. 11 zeigt eine in eine Secure Flash Card SFC integrierte Smart Card SC. Die Secure Flash Card SFC hat weiter einen Controller CON und einen Flash Speicher FL und ist in ein Endgerät EG eingefügt. Der Applikationsspeicher AS für Applikationen AP und aktualisierte Applikationen A-AP und das Rückspeicher-Modul BM sind innerhalb der Smart Card SC angeordnet. Ein Lesen von Daten aus der Smart Card SC (Pfeil R) und ein Schreiben von Daten in die Smart Card SC (Pfeil W) wird bei der Konfiguration aus Fig. 11 durch den Controller CON der Secure Flash Card SFC gesteuert. Das erfindungsgemäße Laden von Personalisierungsdaten PD - und ggf. Anwendungsdaten AD - aus dem Rückspeicher-Modul BM in eine aktualisierte Applikation A-AP, z.B. gemäß Fig. 6 oder Fig. 7, wird bei der Konfiguration aus Fig. 11 durch den Controller CON der Secure Flash Card SFC gesteuert.

Fig. 12 zeigt eine ähnliche Konfiguration wie Fig. 11, mit dem Unterschied, dass ein Lesen von Daten aus der Smart Card SC (Pfeil R) und ein Schreiben von Daten in die Smart Card SC (Pfeil W), z.B. Laden von Personalisierungsdaten PD und ggf. Anwendungsdaten AD aus dem Rückspeicher-Modul BM in eine aktualisierte Applikation A-AP, nicht durch den Controller CON der Secure Flash Card SFC gesteuert wird, sondern durch das Endgerät.

## Patentansprüche

1. Verfahren zum Laden einer personalisierungsbedürftigen Applikation (AP) für ein tragbares Speichermedium (SC), das zum Betrieb in einem Endgerät (EG) eingerichtet ist, in das tragbare Speichermedium (SC), wobei
- die Applikation (AP) und Personalisierungsdaten (PD) in einem außerhalb des Speichermediums und außerhalb des Endgeräts (EG) angeordneten Server (SER) bereitgestellt werden, der für eine Übertragung von Applikationen (AP) und Personalisierungsdaten (PD) über eine serverseitige Verbindung (LS) mit dem tragbaren Speichermedium (SC) oder/und dem Endgerät (EG) verbindbar ist,
- die Applikation (AP) zumindest teilweise über die serverseitige Verbindung in einen Applikationsspeicher (AS) des Speichermediums (SC) geladen wird,
- die Personalisierungsdaten (PD) in die Applikation (AP) geladen werden, derart, dass die Applikation (AP) mit den Personalisierungsdaten (PD) personalisiert wird, und
- die Personalisierungsdaten (PD) zumindest teilweise in ein Rückspeicher-Modul (BM) geladen werden, das von in dem Applikationsspeicher (AS) abgespeicherten Applikationen (AP) unabhängig ist, als nichtflüchtiger Speicher gestaltet ist, und innerhalb des tragbaren Speichermediums (SC) angeordnet ist.

2. Verfahren zum Betreiben, in einem Endgerät (EG), eines tragbaren Speichermediums (SC) mit einer Applikation (AP), die gemäß dem Verfahren aus Anspruch 1 in das tragbare Speichermedium (SC) geladen worden ist, wobei
- die im Applikationsspeicher abgespeicherte und personalisierte Applikation (AP) während des Betriebs des Speichermediums (SC) Applikationsdaten (AD) erzeugt oder entgegennimmt, durch welche die abgespeicherte und personalisierte Applikation (AP) geändert wird, und
- die Applikationsdaten (AD) zumindest teilweise in das Rückspeicher-Modul (BM) geladen werden.

3. Verfahren zum Aktualisieren einer in einem tragbaren Speichermedium (SC), das zum Betrieb in einem Endgerät (EG) eingerichtet ist, abgespeicherten Applikation (AP) für das Speichermedium (SC), durch Laden einer aktualisierten Applikation (A-AP), durch welche die abgespeicherte Applikation (AP) ersetzt werden soll, und durch Laden von Personalisierungsdaten (PD) zur Personalisierung der aktualisierten Applikation (A-AP), wobei
- die aktualisierte Applikation (A-AP) in einem außerhalb des Speichermediums (SC) und außerhalb des Endgeräts (EG) angeordneten Server (SER) bereitgestellt wird, der für eine Übertragung von aktualisierten Applikationen (A-AP) über eine serverseitige Verbindung (LS) mit dem tragbaren Speichermedium (SC) oder/und dem Endgerät (EG) verbindbar ist,
- die aktualisierte Applikation (A-AP) zumindest teilweise über die serverseitige Verbindung (LS) in einen Applikationsspeicher (AS) des Speichermediums (SC) geladen wird, und
- die Personalisierungsdaten (PD) aus einem Rückspeicher-Modul (BM) in die aktualisierte Applikation (A-AP) geladen werden, derart, dass die aktualisierte Applikation (A-AP) mit den Personalisierungsdaten (PD) personalisiert wird, wobei das Rückspeicher-Modul (BM) von in dem Applikationsspeicher (AS) abgespeicherten Applikationen (AP) und/ oder aktualisierten Applikationen (A-AP) unabhängig ist, als nichtflüchtiger Speicher gestaltet ist, und innerhalb des tragbaren Speichermediums (SC) angeordnet ist.

4. Verfahren nach Anspruch 3, wobei die im Applikationsspeicher abgespeicherte und personalisierte Applikation (AP) während eines vorangegangenen Betriebs des Speichermediums (SC) Applikationsdaten (AD) erzeugt oder entgegengenommen hat, durch welche die abgespeicherte und personalisierte Applikation (AP) geändert worden ist, und die Applikationsdaten (AD) zumindest teilweise in das Rückspeicher-Modul (BM) geladen worden sind, wobei
- die Applikationsdaten (AD) aus dem Rückspeicher-Modul (BM) in die aktualisierte Applikation (A-AP) geladen werden, derart, dass die aktualisierte Applikation (A-AP) mit den Applikationsdaten (AD) geändert wird.

5. Verfahren nach Anspruch 3 oder 4, wobei die Applikation (AP) aus dem Applikationsspeicher (AS) gelöscht wird.

6. Verfahren nach einem der Ansprüche 1 bis 5, wobei die serverseitige Verbindung (LS) als Funkverbindung gestaltet ist.

7. Verfahren nach einem der Ansprüche 1 bis 6, wobei das Rückspeicher-Modul (BM) zugriffsgesichert ist und ein Zugriff auf im Rückspeicher-Modul (BM) abgespeicherte Personalisierungsdaten (PD) und ggf. Applikationsdaten (AD) höchstens anlässlich eines berechtigten Ladens einer Applikation (AP) oder aktualisierten Applikation (A-AP) in das Speichermedium (SC) ermöglicht wird.

8. Tragbares Speichermedium (SC), eingerichtet zur Durchführung eines Verfahrens nach einem der Ansprüche 1 bis 7 und aufweisend:
- einen Applikationsspeicher (AS), eingerichtet zum Abspeichern von Applikationen (AP; A-AP),
- ein Rückspeicher-Modul (BM), das als nichtflüchtiger Speicher gestaltet ist, und das von im Applikationsspeicher (AS) abgespeicherten Applikationen (AP; A-AP) unabhängig ist.

9. Tragbares Speichermedium (SC) nach Anspruch 8, wobei das Speichermedium (SC) mit einem Mikroprozessor ausgestattet ist.

10. Tragbares Speichermedium (SC) nach Anspruch 8 oder 9 wobei die Applikation (AP; A-AP) als JavaCard Applikation oder JavaCard Applet gestaltet ist.

11. Tragbares Speichermedium (SC) nach einem der Ansprüche 8 bis 10, wobei das Speichermedium (SC) als Pay TV Karte für die Nutzung von Bezahlfernsehen gestaltet ist oder in eine solche Pay TV Karte integriert ist.

12. Tragbares Speichermedium (SC) nach einem der Ansprüche 8 bis 11, wobei das Speichermedium (SC) als Smart Card mit einem Sicherheitsmodul zur Nutzung eines Endgeräts (EG) in einem Mobilfunknetz gestaltet ist oder in eine solche Smart Card integriert ist.

13. Tragbares Speichermedium (SC) nach einem der Ansprüche 8 bis 12, wobei das Speichermedium (SC) als Secure Flash Card (SFC) gestaltet ist oder in eine solche Secure Flash Card (SFC) integriert ist.

14. System mit einem tragbaren Speichermedium (SC) und einem Endgerät (EG) zum Betrieb des Speichermediums (SC),
eingerichtet zur Durchführung eines Verfahrens nach einem der Ansprüche 1 bis 7 und aufweisend:
- in dem tragbaren Speichermedium (SC) einen Applikationsspeicher (AS), eingerichtet zum Abspeichern von Applikationen (AP; A-AP),
- in dem tragbaren Speichermedium (SC) ein Rückspeicher-Modul (BM), das als nichtflüchtiger Speicher gestaltet ist, und das von im Applikationsspeicher (AS) abgespeicherten Applikationen (AP; A-AP) unabhängig ist.

15. System nach Anspruch 14, wobei das tragbare Speichermedium (SC) nach einem der Ansprüche 8 bis 13 gestaltet ist.

## Claims

1. A method for loading an application (AP) requiring personalization for a portable storage medium (SC) which is set up for operation in a terminal (EG) into the portable storage medium (SC), wherein
- the application (AP) and personalization data (PD) are made available in a server (SER) disposed outside the storage medium and outside the terminal (EG), said server being connectible with the portable storage medium (SC) and/or the terminal (EG) via a server-side connection (LS) for a transmission of applications (AP) and personalization data (PD),
- the application (AP) is loaded at least partly via the server-side connection into an application memory (AS) of the storage medium (SC),
- the personalization data (PD) are loaded into the application (AP) in such a way that the application (AP) is personalized with the personalization data (PD), and
- the personalization data (PD) are loaded at least partly into a restore module (BM) which is independent of applications (AP) stored in the application memory (AS), is configured as a non-volatile memory, and is disposed within the portable storage medium (SC).

2. A method for operating, in a terminal (EG), a portable storage medium (SC) having an application (AP) which has been loaded into the portable storage medium (SC) according to the method of claim 1, wherein
- the application (AP) stored in the application memory and personalized generates or receives application data (AD) during the operation of the storage medium (SC), by which data the stored and personalized application (AP) is changed, and
- the application data (AD) are loaded at least partly into the restore module (BM).

3. A method for updating an application (AP) for a storage medium (SC), which application is stored in the portable storage medium (SC) which is set up to be operated in a terminal (EG), by loading an updated application (A-AP) by which the stored application (AP) is to be replaced, and by loading personalization data (PD) for personalizing the updated application (A-AP), wherein
- the updated application (A-AP) is made available in a server (SER) disposed outside the storage medium (SC) and outside the terminal (EG), said server being connectible with the portable storage medium (SC) or/and the terminal (EG) via a server-side connection (LS) for a transmission of updated applications (A-AP),
- the updated application (A-AP) is loaded at least partly via the server-side connection (LS) into an application memory (AS) of the storage medium (SC), and
- the personalization data (PD) are loaded from a restore module (BM) into the updated application (A-AP) in such a way that the updated application (A-AP) is personalized with the personalization data (PD), the restore module (BM) being independent of applications (AP) and/or updated applications (A-AP) stored in the application memory (AS), being configured as a non-volatile memory, and being disposed within the portable storage medium (SC).

4. The method according to claim 3, wherein the application (AP) stored in the application memory and personalized has generated or received application data (AD) during a preceding operation of the storage medium (SC), by which data the stored and personalized application (AP) has been changed, and the application data (AD) have been loaded at least partly into the restore module (BM), wherein
- the application data (AD) are loaded from the restore module (BM) into the updated application (A-AP) in such a way that the updated application (A-AP) is changed with the application data (AD).

5. The method according to claim 3 or 4, wherein the application (AP) is deleted from the application memory (AS).

6. The method according to any of claims 1 to 5, wherein the server-side connection (LS) is configured as a radio connection.

7. The method according to any of claims 1 to 6, wherein the restore module (BM) is access-protected and an access to personalization data (PD), and possibly application data (AD), stored in the restore module (BM) is made possible only on the occasion of an authorized loading of an application (AP) or updated application (A-AP) into the storage medium (SC).

8. A portable storage medium (SC) set up to carry out a method according to any of claims 1 to 7 and having:
- an application memory (AS) set up to store applications (AP, A-AP),
- a restore module (BM) which is configured as a non-volatile memory and which is independent of applications (AP, A-AP) stored in the application memory (AS).

9. The portable storage medium (SC) according to claim 8, wherein the storage medium (SC) is provided with a microprocessor.

10. The portable storage medium (SC) according to claim 8 or 9, wherein the application (AP, A-AP) is configured as a JavaCard application or JavaCard applet.

11. The portable storage medium (SC) according to any of claims 8 to 10, wherein the storage medium (SC) is configured as a pay TV card for the use of pay TV or is integrated in such a pay TV card.

12. The portable storage medium (SC) according to any of claims 8 to 11, wherein the storage medium (SC) is configured as a smart card having a security module for using a terminal (EG) in a mobile phone network or is integrated in such a smart card.

13. The portable storage medium (SC) according to any of claims 8 to 12, wherein the storage medium (SC) is configured as a secure flash card (SFC) or is integrated in such a secure flash card (SFC).

14. A system having a portable storage medium (SC) and a terminal (EG) for operating the storage medium (SC),
set up to carry out a method according to any of claims 1 to 7 and having:
- in the portable storage medium (SC) an application memory (AS) set up to store applications (AP, A-AP),
- in the portable storage medium (SC) a restore module (BM) which is configured as a non-volatile memory, and which is independent of applications (AP, A-AP) stored in the application memory (AS).

15. The system according to claim 14, wherein the portable storage medium (SC) is configured according to any of claims 8 to 13.

## Revendications

1. Procédé de chargement d'une application (AP) nécessitant une personnalisation, destinée à un support de mémorisation (SC) portable conçu pour fonctionner dans un terminal (EG), dans le support de mémorisation (SC) portable, cependant que
- l'application (AP) et les données de personnalisation (PD) sont mises à disposition dans un serveur (SER) qui agencé à l'extérieur du support de mémorisation et à l'extérieur du terminal (EG) et qui, pour une transmission d'applications (AP) et de données de personnalisation (PD), peut, par l'intermédiaire d'une connexion (LS) côté serveur, être connecté au support de mémorisation (SC) portable et/ou au terminal (EG),
- l'application (AP) est, au moins partiellement, chargée par l'intermédiaire de la connexion côté serveur dans une mémoire d'application (AS) du support de mémorisation (SC),
- les données de personnalisation (PD) sont chargées dans l'application (AP), de telle manière que l'application (AP) est personnalisée avec les données de personnalisation (PD), et
- les données de personnalisation (PD) sont, au moins partiellement, chargées dans un module de récupération (BM) qui est indépendant d'applications (AP) enregistrées dans la mémoire d'application (AS), est réalisé sous forme de mémoire non volatile et est agencé à l'intérieur du support de mémorisation (SC) portable.

2. Procédé de fonctionnement, dans un terminal (EG), d'un support de mémorisation (SC) portable muni d'une application (AP) qui a été chargée selon le procédé de la revendication dans le support de mémorisation (SC) portable, cependant que
- l'application (AP) enregistrée et personnalisée dans la mémoire d'application génère ou réceptionne, durant le fonctionnement du support de mémorisation (SC), des données d'application (AD) par lesquelles l'application (AP) enregistrée et personnalisée est modifiée, et
- les données d'application (AD) sont, au moins partiellement, chargées dans le module de récupération (BM).

3. Procédé d'actualisation d'une application (AP), destinée à un support de mémorisation (SC), enregistrée dans un support de mémorisation (SC) conçu pour fonctionner dans un terminal (EG), dans le support de mémorisation (SC) portable, par chargement d'une application actualisée (A-AP) par laquelle l'application (AP) enregistrée doit être remplacée, et par chargement de données de personnalisation (PD) destinées à la personnalisation de l'application actualisée (A-AP), cependant que
- l'application actualisée (A-AP) est mise à disposition dans un serveur (SER) qui agencé à l'extérieur du support de mémorisation (SC) et à l'extérieur du terminal (EG) et qui, pour une transmission d'applications actualisées (A-AP), peut, par l'intermédiaire d'une connexion (LS) côté serveur, être connecté au support de mémorisation (SC) portable et/ou au terminal (EG),
- l'application actualisée (A-AP) est, au moins partiellement, chargée par l'intermédiaire de la connexion (LS) côté serveur dans une mémoire d'application (AS) du support de mémorisation (SC),
- les données de personnalisation (PD) sont chargées depuis un module de récupération (BM) dans l'application actualisée (A-AP), de telle manière que l'application actualisée (A-AP) est personnalisée avec les données de personnalisation (PD), cependant que le module de récupération (BM) est indépendant d'applications (AP) et/ou d'applications actualisées (A-AP) enregistrées dans la mémoire d'application (AS), est réalisé sous forme de mémoire non volatile et est agencé à l'intérieur du support de mémorisation (SC) portable.

4. Procédé selon la revendication 3, cependant que l'application (AP) enregistrée et personnalisée dans la mémoire d'application a généré ou réceptionné, durant un fonctionnement du support de mémorisation (SC) antérieur, des données d'application (AD) par lesquelles l'application (AP) enregistrée et personnalisée a été modifiée, et que les données d'application (AD) ont été, au moins partiellement, chargées dans le module de récupération (BM), cependant que
- les données d'application (AD) sont chargées depuis le module de récupération (BM) dans l'application actualisée (A-AP), de telle manière que l'application actualisée (A-AP) est modifiée avec les données d'application (AD).

5. Procédé selon la revendication 3 ou 4, l'application (AP) étant effacée de la mémoire d'application (AS).

6. Procédé selon une des revendications de 1 à 5, la connexion (LS) côté serveur étant réalisée sous forme de connexion radio.

7. Procédé selon une des revendications de 1 à 6, l'accès au module de récupération (BM) étant sécurisé, et un accès à des données de personnalisation (PD) enregistrées dans la mémoire de récupération (BM) et éventuellement à des données d'application (AD) n'étant, au plus, rendu possible qu'à l'occasion d'un chargement autorisé d'une application (AP) ou d'une application actualisée (A-AP) dans le support de mémorisation (SC).

8. Support de mémorisation (SC) portable, conçu pour exécuter un procédé selon une des revendications de 1 à 7, et comportant :
- une mémoire d'application (AS) conçue pour la mémorisation d'applications (A; A-AP),
- un module de récupération (BM) qui est réalisé sous forme de mémoire non volatile et est indépendant d'applications (AP; A-AP) enregistrées dans la mémoire d'application (AS).

9. Support de mémorisation (SC) portable selon la revendication 8, le support de mémorisation (SC) étant équipé d'un microprocesseur.

10. Support de mémorisation (SC) portable selon la revendication 8 ou 9, l'application (AP; A-AP) étant réalisée sous forme d'application Java Card ou sous forme d'applet Java Card.

11. Support de mémorisation (SC) portable selon une des revendications de 8 à 10, le support de mémorisation (SC) étant réalisé sous forme de carte de TV payante pour l'utilisation de la télévision à péage ou étant intégré dans une telle carte de TV payante.

12. Support de mémorisation (SC) portable selon une des revendications de 8 à 11, le support de mémorisation (SC) étant réalisé sous forme de carte à puce dans un module de sécurité pour l'utilisation d'un terminal (EG) dans un réseau de téléphonie mobile ou étant intégré dans une telle carte à puce.

13. Support de mémorisation (SC) portable selon une des revendications de 8 à 12, le support de mémorisation (SC) étant réalisé sous forme de carte flash sécurisée (SFC) ou étant intégré dans une telle carte flash sécurisée (SFC).

14. Système comportant un support de mémorisation (SC) portable et un terminal (EG) pour le fonctionnement du support de mémorisation (SC),
conçu pour l'exécution d'un procédé selon une des revendications de 1 à 7, et comportant :
- dans le support de mémorisation (SC) portable, une mémoire d'application (AS) conçue pour l'enregistrement d'applications (AP; A-AP),
- dans le support de mémorisation (SC) portable, un module de récupération (BM) qui est réalisé sous forme de mémoire non volatile et qui est indépendant d'applications (AP; A-AP) enregistrées dans la mémoire d'application (AS).

15. Système selon la revendication 14, le support de mémorisation (SC) portable étant réalisé selon une des revendications de 8 à 13.
